# EUROPÄISCHE PATENTSCHRIFT

(11) **EP 0 930 952 B1**
(45) Veröffentlichungstag und Bekanntmachung des Hinweises auf die Patenterteilung: **27.03.2002**
(21) Anmeldenummer: 97909261.6
(22) Anmeldetag: 13.09.1997
(51) Int. Cl.: B23K 26/00

(54) **VERFAHREN UND VORRICHTUNG ZUM FÜGEN VON ÜBERLAPPEND MITEINANDER ZU VERBINDENDEN FLACHPRODUKTEN**
METHOD AND DEVICE FOR JOINING FLAT PRODUCTS TO BE CONNECTED SUCH THAT THEY OVERLAP
PROCEDE ET DISPOSITIF D'ASSEMBLAGE DE PRODUITS PLATS SE CHEVAUCHANT

(30) Priorität: 01.10.1996 DE 19640612
(43) Veröffentlichungstag der Anmeldung: 28.07.1999
(73) Patentinhaber: Thyssen Krupp Stahl AG, 40211 Düsseldorf (DE)
(72) Erfinder: PIRCHER, Hans, D-45481 Mülheim (DE); KAWALLA, Rudolf, D-46422 Bottrop (DE); SUSSEK, Gerd, D-45481 Mülheim (DE); STEGEMANN-AUHAGE, D-46537 Dinslaken (DE); POLZIN, Ralf, D-52134 Herzogenrath-Kohlscheid (DE)
(74) Vertreter: Knauf, Rudolf, Dipl.-Ing.
(86) Internationale Anmeldenummer: EP9705018
(87) Internationale Veröffentlichungsnummer: WO9814301

(56) Entgegenhaltungen:
- DE-C- 4 429 913
- DE-C- 19 502 140

## Beschreibung

Die Erfindung bezieht sich auf ein Verfahren zum Fügen von überlappend miteinander zu verbindenden Flachprodukten aus metallischen Werkstoffen, die unter einem spitzen Winkel aufeinander zulaufend in einen Walzspalt eingeführt und im Walzspalt aufeinandergepreßt werden, nachdem mindestens eines der Flachprodukte unmittelbar vor seinem physischen Kontakt mit dem anderen Flachprodukt an seiner im Bereich des Überlappstoßes liegenden Oberfläche durch Strahlungsenergie erwärmt, aber nicht der Grundwerkstoff aufgeschmolzen worden ist. Niedrigschmelzende Überzüge, wie z.B. Zink, können hingegen aufgeschmolzen werden.

Die Erfindung betrifft ferner eine zur Durchführung des Verfahrens geeignete Vorrichtung, die im wesentlichen aus zwei Walzen und einer in den Walzspalt gerichteten Strahlungsquelle besteht.

Bei einem bekannten Verfahren und einer bekannten Vorrichtung dieser Art wird die Strahlungsenergie von einer Laserstrahlquelle erzeugt (DE 195 02 140 C1). Bei dieser Erwärmung kann eine Temperatur eingehalten werden, bei der es noch nicht zu einem Verdampfen von Beschichtungen, wie Zink, mit niedriger Schmelztemperatur kommt. Ein Aufschmelzen bzw. Verdampfen des Beschichtungswerkstoffes würde nämlich hinsichtlich der Festigkeit der Verbindung nachteilig sein. Die beiden den Walzspalt bildenden Walzen haben eine den Überlappstoß beidseits überragende, über ihre gesamte Länge glatte zylindrische Mantelfläche. Um die für die Verbindung der beiden Flachprodukte erforderliche Flächenpressung aufzubringen, werden sie nach Erwärmung einem Umformstich mit einem im Vergleich zum Walzplattieren kleinen Umformgrad von ≤ 20% unterworfen. Die dafür erforderliche Walzkraft ist erheblich, weil bei der Erwärmung auch nicht erwärmte Bereiche der Flachprodukte neben dem Überlappstoß erfaßt werden. Damit es insbesondere bei unterschiedlich weichen Werkstoffen nicht zu einem Abscheren des weicheren Flachproduktes an der Kante des härteren Flachproduktes kommt, ist es vorgesehen, das weiche Flachprodukt durch Aufbringen eines Gegendruckes mittels eines Unterlegstreifens oder durch eine entsprechend kalibrierte Walze abzustützen. In jedem Fall ist mit den Walzen auch eine unerwünschte Dickenreduzierung des Nachbarbereichs mindestens eines Flachproduktes neben dem Überlappstoß verbunden. Aus diesen Gründen ist das bekannte Verfahren nicht optimal.

Der Erfindung liegt die Aufgabe zugrunde, ein Verfahren zum Fügen von einander überlappend miteinander zu verbindenden Flachprodukten aus metallischen Werkstoffen, insbesondere aus unterschiedlichen, nicht oder schwer durch Schmelzschweißung miteinander verbindbaren Werkstoffen oder Werkstoffen sehr unterschiedlicher Härte, z.B. Stahl/Aluminiumverbindungen, aber auch Stahl/Kupfer, Stahl/Titan oder Stahl/Edelstahl, das mit geringerem Aufwand durchführbar ist, und eine zur Durchführung dieses Verfahrens geeignete Vorrichtung zu schaffen.

Diese Aufgabe wird erfindungsgemäß bei einem Verfahren der eingangs genannten Art dadurch gelöst, daß die Flächenpressung im Walzspalt auf den Bereich des Überlappstoßes beschränkt ist. Vorzugsweise wird dabei ein Materialfluß des Flachproduktes im Walzspalt in Längsrichtung des Überlappstoßes behindert.

Vorrichtungsmäßig wird die Aufgabe dadurch gelöst, daß von den beiden Walzen ein Walzenmantel mit seinem wirksamen Druckbereich in seiner axialen Erstreckung kürzer als die axiale Gesamtlänge der Walzen ist, wobei vorzugsweise dieser Walzenmantel mit seinem wirksamen Druckbereich umlaufende Rillen aufweist.

Durch die Beschränkung der Flächenpressung im Walzspalt auf den Bereich des Überlappstoßes, insbesondere in Verbindung mit der Beeinflussung des Materialflusses, läßt sich die für das Fügen erforderliche Flächenpressung mit einer geringeren Walzkraft als beim gattungsgleichen Verfahren, bei dem im Walzstich auch nicht erwärmtes Material erfaßt wird, durchführen. Vergleicht man die benötigte Walzkraft einer Verbindung St14Z/AlMoSi, so ergibt sich eine Reduzierung von 60 kN bei einem 25 mm breiten Aluminiumstreifen für das konventionelle Verfahren auf 5 kN für das erfindungsgemäße Verfahren bei einer Überlappbreite von 9 mm. Bezogen auf die eingebrachte Strahlungsenergie ergibt sich also ein optimaler Umformwirkungsgrad. Das hat weiter zur Folge, daß die erforderlichen Vorrichtungen wesentlich leichter gebaut sein können. Die Beschränkung auf einen vergleichsweise schmalen Bereich, wo die Flächenpressung stattfindet, erleichtert auch das Fügen von formdefinierten Blechzuschnitten, wie z.B. den sogenannten "Tailored Blanks", bei denen häufig der Stoß nicht gerade, sondern in Kurven verläuft. Gerade bei aus verschiedenen Flachprodukten zusammengesetzten Bauteilen, die entsprechend ihrer Beanspruchung im Betrieb unterschiedlich dimensioniert sind, aber nicht nur bei solchen Bauteilen, ist es wichtig, daß die dem Überlappstoß benachbarten Bauteile durch das Fügen nicht beeinträchtigt werden. Weil bei dem erfindungsgemäßen Verfahren das Erwärmen und die Umformung auf den Überlappstoß beschränkt bleibt, bleibt einerseits die wärmebeeinflußte Zone möglichst klein und andererseits die volle Materialstärke in den benachbarten Bereichen der Flachprodukte erhalten, was bei dem bekannten Verfahren mit dem Walzstich nicht möglich war.

Nach weiteren Ausgestaltungen der Erfindung ist es von Vorteil, wenn die beiden Flachprodukte an ihren Oberflächen erwärmt werden. Bei unterschiedlich weichen Werkstoffen der beiden Flachprodukte hat es sich als vorteilhaft herausgestellt, wenn die Breite des Überlappstoßes mindestens gleich der 1,5-fachen Dicke des Flachproduktes aus dem weicheren Werkstoff ist.

Die bereits erwähnte Behinderung des Materialflusses des Flachproduktes längs zum Überlappstoß läßt sich konstruktiv auf verschiedene Art und Weise erreichen. Wesentlich ist bei diesen Ausgestaltungen der Erfindung, daß der Werkstoff in Aufnahmeräume der an der Flächenpressung beteiligten Teile fließen kann. So ist nach einer Alternative die Oberfläche mindestens eines an der Flächenpressung beteiligten Teils (Walze - Flachprodukt) profiliert. Die Oberflächenprofilierung besteht dabei vorzugsweise aus Umfangs- bzw. Längsrillen. Diese Rillen erlauben dann eine ausreichend hohe Flächenpressung, behindern aber andererseits einen Materialfluß längs zum Überlappstoß, weil das Material in die Rillen einfließen kann. Außerdem dienen sie der Führung der Flachprodukte in Richtung des Überlappstoßes. Die gerillte Walze wirkt bevorzugt auf den weicheren Grundwerkstoff ein. Bringt man die Rillung in den einen Grundwerkstoff ein, so wählt man vorzugsweise den härteren.

Im folgenden wird die Erfindung anhand einer schematischen Zeichnung erläutert, die zwei alternative Möglichkeiten für die Durchführung des erfindungsgemäßen Verfahrens darstellt. Im einzelnen zeigen:
- Figur 1: eine Vorrichtung zum Fügen von zwei Bändern oder Blechen im vertikalen Längsschnitt,
- Figur 2: die Vorrichtung gemäß Figur 1 im Schnitt nach Linie I-I der Figur 1,
- Figur 3: die Vorrichtung gemäß Figur 1 in abgewandelter Darstellung im Schnitt nach Linie I-I der Figur 1 und
- Figur 4: die Vorrichtung gemäß Fig. 1 in einer weiteren abgewandelten Darstellung im Schnitt nach Linie I-I der Fig. 1.

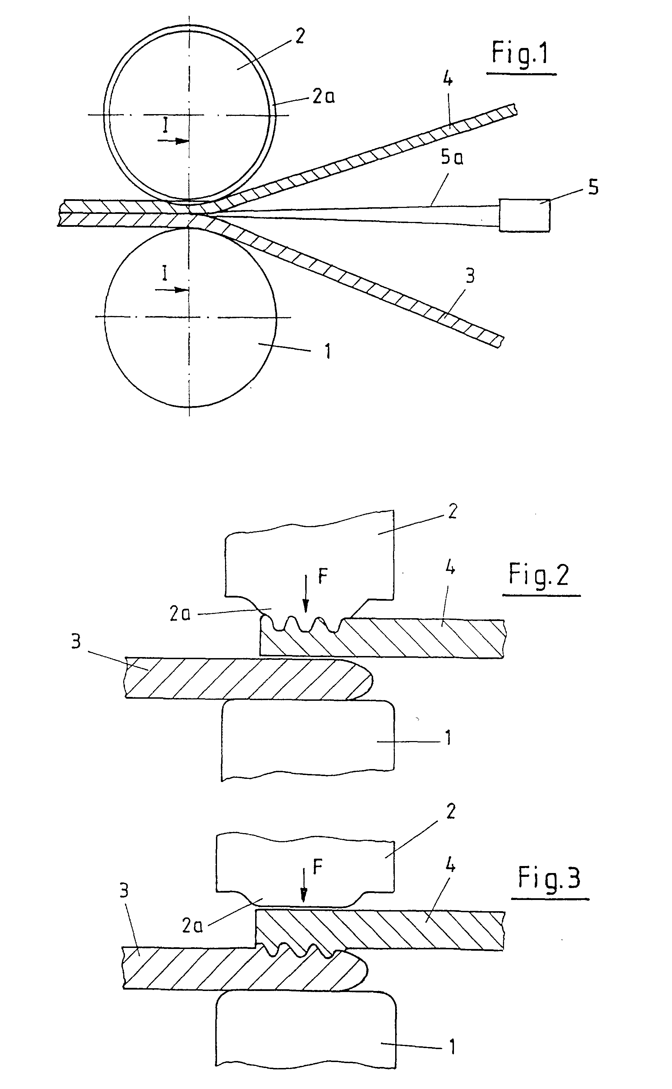

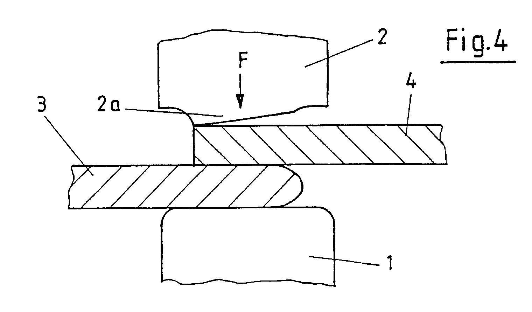

Die in Figur 1 dargestellte Vorrichtung weist zwei Walzen 1, 2 auf, von denen die eine Walze 1 eine zylindrische Mantelfläche 1 und die andere Walze 2 eine Mantelfläche mit einem umlaufenden erhabenen Bereich 2a aufweist. Dieser Bereich 2a der Mantelfläche bildet mit der zylindrischen Mantelfläche der einen Walze 1 einen Walzspalt, in den zwei miteinander unter einem spitzen Winkel von vorzugsweise weniger als 15°, insbesondere 10°, einander überlappend zugeführte Flachprodukte 3, 4 eingeführt werden. Die beiden einander zugekehrten Oberflächen der Flachprodukte 3, 4 werden im Zwickel am Walzspalt mittels eines Strahls 5a einer Laserstrahlungsquelle 5 nur auf der Breite des Überlappstoßes erwärmt, ohne daß die Schmelztemperatur des Grundwerkstoffes der Flachprodukte 3, 4 erreicht wird. Im Bereich des Walzspaltes erfolgt dann durch Flächenpressung im Bereich des Überlappstoßes die Verbindung der beiden Flachprodukte 3, 4. Die Besonderheiten bei dieser Flächenpressung sind den Figuren 3 und 4 zu entnehmen.

Bei der ersten alternativen Ausführung der Figur 2 ist der erhabene Bereich 2a der Mantelfläche der Walze 2 auf die Breite des Überlappstoßes beschränkt. Darüber hinaus ist dieser erhabene Bereich in Umfangsrichtung mehrfach gerillt.

Das Ausführungsbeispiel der Figur 3 unterscheidet sich von dem der Figur 2 nur darin, daß der erhabene Bereich 2a nicht gerillt ist. Stattdessen ist in einem der beiden Flachprodukte eine in Überlappstoßrichtung verlaufende Mehrfachrillung vorgesehen, und zwar bei dem Flachprodukt 4. Die Rillung wird bevorzugt in das härtere Material eingebracht.

In beiden Ausführungen ist aufgrund des erhabenen Bereichs 2a im Walzspalt der Druck auf den Bereich des Überlappstoßes beschränkt. Diese Beschränkung der Flächenpressung garantiert, daß eine Umformung der beiden Flachprodukte 3, 4 nur im Bereich des Überlappstoßes erfolgt. Sofern Rillen vorgesehen sind, behindern sie einen Materialfluß in Längsrichtung des Überlappstoßes. Das Material kann dann nämlich in die Rillen eintreten. Außerdem begünstigen sie die Führung der Flachprodukte 3, 4 in Längsrichtung des Überlappstoßes.

Eine weitere Alternative zeigt Figur 4, wobei der erhabene Bereich 2a konisch ausgebildet ist. Gemäß dieser Ausführung wird der Materialfluß in Querrichtung begünstigt und in Längsrichtung vermindert. Weitere Vorteile des erfindungsgemäßen Verfahrens liegen darin, daß außerhalb der Überlappzone das Flachprodukt nicht kaltverfestigt und/oder wärmebeeinflußt wird und die hergestellte Verbindung kaltumformbar ist. Auch ist hierdurch möglich, die Kante des anderen Flachproduktes vorzubereiten, z.B. anzurunden, was sich ebenfalls günstig auf eine nachfolgende Kaltverformung auswirkt.

## Patentansprüche

1. Verfahren zum Fügen von überlappend miteinander zu verbindenden Flachprodukten (3, 4) aus metallischen Werkstoffen, insbesondere in Form von Bändern, Blechen und Blechzuschnitten, die unter einem spitzen Winkel aufeinander zulaufend in einen Walzspalt eingeführt und im Walzspalt aufeinander gepreßt werden, nachdem mindestens eines der Flachprodukte unmittelbar vor seinem physischen Kontakt mit dem anderen Flachprodukt an seiner im Bereich des Überlappstoßes liegenden Oberfläche durch Strahlungsenergie erwärmt, aber nicht der Grundwerkstoff aufgeschmolzen worden ist, **dadurch gekennzeichnet, daß** die Flächenpressung im Walzspalt auf den Bereich des Überlappstoßes beschränkt wird.

2. Verfahren nach Anspruch 1, **dadurch gekennzeichnet, daß** beide Flachprodukte erwärmt werden.

3. Verfahren nach Anspruch 1 oder 2, **dadurch gekennzeichnet, daß** bei unterschiedlich weichen Werkstoffen der beiden Flachprodukte die Breite des Überlappstoßes mindestens gleich der 1,5-fachen Dicke des Flachproduktes aus dem weicheren Werkstoff ist.

4. Verfahren nach einem der Ansprüche 1 bis 3, **dadurch gekennzeichnet, daß** ein Materialfluß des Flachproduktes bzw. der Flachprodukte im Walzspalt in Längsrichtung des Überlappstoßes behindert wird.

5. Verfahren nach Anspruch 4, **dadurch gekennzeichnet, daß** zur Behinderung des Materialflusses entweder ein Flachprodukt mit in Richtung des Überlappstoßes verlaufenden Längsrillen oder eine Walze verwendet wird, die im wirksamen Druckbereich mit Umfangsrillen versehen ist.

6. Verfahren nach Anspruch 4, **dadurch gekennzeichnet, daß** zur Behinderung des Materialflusses eine konisch kalibrierte Walze verwendet wird.

7. Vorrichtung zum Fügen von überlappend miteinander zu verbindenden Flachprodukten (3, 4) aus metallischen Werkstoffen mit zwei Walzen (1, 2) und einer in den Walzspalt gerichteten Wärmestrahlungsquelle (5), **dadurch gekennzeichnet, daß** von den beiden Walzen (1, 2) ein Walzenmantel mit seinem wirksamen Druckbereich (2a) in seiner axialen Erstreckung kürzer als die axiale Gesamtlänge der Walzen ist.

8. Vorrichtung nach Anspruch 7, **dadurch gekennzeichnet, daß** der Walzenmantel mit seinem wirksamen Druckbereich (2a) umlaufende Rillen aufweist.

## Claims

1. A method for joining overlapping flat products (3, 4), to be bonded with one another, made of metallic materials, particularly in the form of strips, sheets, and sheet blanks, which are introduced into a roller gap running toward one another at an acute angle and are pressed onto one another in the roller gap, after at least one of the flat products is heated on its surface lying in the region of the overlap joint immediately before its physical contact with the other flat product, but the base material does not become molten, **characterized in that** the surface pressure in the roller gap is restricted to the region of the overlap joint.

2. A method according to claim 1, **characterized in that** both flat products are heated.

3. A method according to claim 1 or 2, **characterized in that**, if the materials of the two flat products have differing hardnesses, the width of the overlap joint is at least equal to 1.5 times the thickness of the flat product made of the softer material.

4. A method according to one of the claims 1 to 3, **characterized in that** a flow of material of the flat product(s) in the roller gap in the lengthwise direction of the overlap joint is prevented.

5. A method according to claim 4, **characterized in that**, to prevent the flow of material, either a flat product with lengthwise grooves running in the direction of the overlap joint or a roller which is provided with peripheral grooves in the effective pressing region is used.

6. A method according to claim 4, **characterized in that** a conical calibrated roller is used to prevent the flow of material.

7. A device for joining overlapping flat products (3, 4) to be bonded with one another, which are made of metallic materials, having two rollers (1, 2) and a heat radiation source (5) directed into the roller gap, **characterized in that** a roller sleeve of both rollers (1, 2) with an effective pressing region (2a) is shorter in its axial extension than the overall axial length of the rollers.

8. A device according to claim 7, **characterized in that** the roller sleeve with an effective pressure region (2a) has peripheral grooves.

## Revendications

1. Procédé destiné à l'assemblage par joint à recouvrement de produits laminés plats (3, 4), réalisés dans des matériaux métalliques, en particulier en forme de bandes, de plaques métalliques ou de découpes métalliques, qui s'engagent dans une emprise en convergeant à angle aigu l'un vers l'autre et qui sont pressés l'un contre l'autre dans l'emprise, après qu'au moins l'un des produits laminés plats, directement avant son contact physique avec l'autre produit laminé plat, est chauffé par énergie rayonnante sur sa surface située dans la zone du joint à recouvrement, mais sans que le matériau de base soit mis en fusion, **caractérisé en ce que** la pression superficielle exercée dans l'emprise est limitée à la zone du joint à recouvrement.

2. Procédé selon la revendication 1, **caractérisé en ce que** les deux produits laminés plats sont chauffés.

3. Procédé selon la revendication 1 ou 2, **caractérisé en ce que**, en présence de deux produits laminés plats réalisés dans des matériaux à dureté différente, la largeur du joint à recouvrement est au moins égale à 1,5 fois l'épaisseur du produit laminé plat réalisé dans le matériau le moins dur.

4. Procédé selon l'une quelconque des revendications 1 à 3, **caractérisé en ce que** le flux du matériau du produit laminé plat ou des produits laminés plats dans l'emprise est empêché dans le sens longitudinal du joint à recouvrement.

5. Procédé selon la revendication 4, **caractérisé en ce que**, pour empêcher le flux du matériau, on utilise soit un produit laminé plat muni de cannelures longitudinales orientées dans le sens du joint à recouvrement, soit un cylindre dont la zone de pression active est munie de cannelures périphériques.

6. Procédé selon la revendication 4, **caractérisé en ce que** l'on utilise un cylindre calibré avec une forme conique pour empêcher le flux du matériau.

7. Dispositif destiné à l'assemblage par joint à recouvrement de produits laminés plats (3, 4), réalisés dans des matériaux métalliques, comprenant deux cylindres (1, 2) et une source de rayonnement thermique (5) dirigée vers l'emprise, **caractérisé en ce que** l'un des deux cylindres (1, 2) comporte une surface latérale, dont la zone de pression (2a) active présente une dimension axiale plus courte que la longueur axiale totale des cylindres.

8. Dispositif selon la revendication 7, **caractérisé en ce que** la surface latérale du cylindre comporte des cannelures périphériques dans sa zone de pression (2a) active.
